# EUROPEAN PATENT APPLICATION

(11) **EP 4 553 332 A1**
(43) Date of publication of application: **14.05.2025**
(21) Application number: 23208332.9
(22) Date of filing: 07.11.2023
(51) Int. Cl.: F16D 43/18, F16D 13/10

(54) **CENTRIFUGAL CLUTCH FOR A GEARBOX**

(71) Applicant: PAPIZTURBINE Europe GmbH, 35104 Lichtenfels (DE)
(72) Inventor: PAPIZ, Juan Manuel, 2189 Cruz Alta City Cordoba Province (AR)
(74) Representative: Eisenführ Speiser

(57) **Abstract**

The invention concerns a centrifugal clutch (32) in particular a centrifugal clutch (32) for a small turboprop engine (10). The centrifugal clutch (32) comprises an input assembly (32.1) with a lever carrier (50). A plurality of levers (52) are pivotally connected to the lever carrier (50) allowing each lever (52) to pivot around a pivot bearing (52.3) with a pivot axis, thus defining two lever arms (52.1, 52.2) that extend in opposite directions from the pivot axis, wherein. A first lever arm (52.1) is provided with a weight (54) while a second lever arm (52.2) is provided with a friction pad (56). The pivot axis for each lever (52) is arranged laterally offset from a central axis of rotation of the input assembly. The centrifugal clutch (32) comprises an output assembly (32.2) that comprises a cylinder body (6) coaxially arranged with the central axis of the input assembly.

## Description

The invention relates to a centrifugal clutch, in particular a centrifugal clutch for coupling a reduction gear of a turboprop engine with a gas turbine of the turboprop engine. The invention relates in particular to a combustion chamber of a combustor a gas turbine of a gas turbine engine, in particular a turboprop engine.

Turboprop engines are generally known. A turboprop engine comprises a gas turbine that drives a propeller via a reduction gear. The gas turbine engine comprises a compressor, a combustion chamber and a turbine. The compressor is fed with air from the environment, compresses the air and feeds the compressed air to the combustion chamber. In the combustion chamber, the compressed air is mixed with fuel and the mixture is ignited and combusts. The hot combustion gases then drive a gas turbine that in turn drives the compressor and the propeller.

A turboprop engine is typically used as an aero engine that creates thrust by means of the propeller. The thrust of the hot combustion gases at the exhaust of the turbine does not significantly contribute to the engine's overall thrust.

For larger airplanes, gas turbine engines and turboprop engines are the most secure and efficient aero engines. Gas turbine engines and turboprop engines having a size, weight and power suiting smaller airplane, however, suffer from a very high consumption and thus are economically not feasible.

While turboprop engines typically are used for larger airplanes, small airplanes typically are powered by piston engines, for instance air cooled boxer engines providing a power between 100 and 400 kW. While turboprop engines have proven to be very reliable, replacing less reliable piston engines with turboprop engines typically is not feasible, because the efficiency of turboprop engines suffers from downscaling. This results in higher fuel consumption.

Since for power for driving a propeller is generated by a gas turbine of a turboprop engine, a turboprop engine requires a reduction gear that reduces the rotation speed of the gas turbine for achieving a reduced rotation speed that is suitable for the propeller. In order to allow the gas turbine of the turboprop engine to speed up before driving the propeller, typically a centrifugal clutch is provided between a turbine shaft of the gas turbine and a reduction gear that is connected with a main shaft for the propeller.

Typically prior art centrifugal clutches comprise an input assembly with weights and friction pads that rotate within a hollow cylindrical body connected to an output shaft. Only if the rotation speed of the input shaft and thus the rotation speed of the assembly comprising the weights with the friction pads is high enough, the weights with friction pads are forced outwardly by centrifugal forces. The centrifugal forces are pressing the weights with the friction pads against the inner circumferential wall of the hollow cylindrical member. If the centrifugal forces are strong enough, the friction between the friction pads and the inner wall of the hollow cylindrical member is strong enough to make the hollow cylindrical member and the output shaft rotating with the speed of the input shaft.

It is an object of the invention to provide a centrifugal clutch that is suitable for small size turboprop engines for small airplanes.

According to the invention, the object is achieved by a centrifugal clutch that comprises an input assembly with a lever carrier to which a plurality of levers are pivotally connected allowing each lever to pivot around a pivot bearing with a pivot axis, thus defining two lever arms that extend in opposite directions from the pivot axis. Accordingly, each lever may be unitary and has two lever arms. A first lever arm is provided with a weight while the other, second lever arm is provided with a friction pad. The pivot axis for each lever is arranged laterally offset from a central axis of the input assembly. An output assembly carries a cylinder body coaxially arranged with the central axis of the input assembly. During operation, the weights on the first lever arms are forced outwardly by centrifugal forces thus forcing the friction pads on the second lever arms inwardly and towards a cylindrical outer surface of the cylinder body of the output assembly.

The centrifugal clutch according to the invention has two advantages: the overall dimension of the clutch can be minimized, in particular, the diameter of the clutch can be reduced because the clutch does not need a hollow cylindrical member on the output side. Secondly, the friction forces created independence of the centrifugal forces not only depend on the weight of the weights but also on the length of the first lever arm of each lever in relation to the second lever arm of that lever. Thus, smaller weights with a smaller mass can nevertheless generate high enough friction forces between the friction pads and the outer circumferential surface of the cylinder body of the output assembly.

In general, a clutch is a means for transferring a torque from an input shaft to an output shaft. The input shaft is connected with an input assembly comprising weights and friction pads while the torque provided to the output shaft depends on friction forces that are resulting from centrifugal forces if the input assembly rotates. While prior art centrifugal clutches are comprising a hollow cylindrical member that is connected to the output shaft, the instant centrifugal clutch comprises a cylindrical body as part of an output assembly wherein the friction pads are acting to the outside of the cylindrical body. With the instant centrifugal clutch, the friction pads are not directly mounted to the weights. Rather, for each friction pad and each weight a lever with two lever arms is provided. A first lever arm carries the weight while the other lever arm carries the friction pad. The lever arm can pivot around a pivot axis that is offset from a central axis of rotation of the input assembly. Centrifugal forces acting on the weight on a respective first lever arm are forcing the lever to pivot around the pivot axis, thus causing a friction pad on the respective second lever arm to move inwardly and to contact an outer surface of the cylindrical body of the output assembly.

As opposed to the prior art, the input assembly is an outer part of the centrifugal clutch and the output assembly is an inner part of the centrifugal clutch.

Centrifugal clutches are very popular and are used in thousands of mechanical applications. They have a very simple functionality and because of that, are very safe to use.

A usual centrifugal clutch is made to engage one stationary part with one that is in movement. This is because normally a moving part need to freely rotate and accelerate before engage with other part. To make this happen, conventional centrifugal clutches have a central rotating part named shaft or clutch and an external stationary part named bell or body. The shaft or clutch have some weights with friction pads and with some springs that keep the counterweights close to the shaft. Centrifugal forces that occur when the shaft starts to spin, cause the weights to move outwardly till the friction pads touch the bell and make it turn like the shaft to fully rotate when engaged.

The contra centrifugal clutch according to the invention uses the same principle but in an opposite way, using levers that each have a tilting point almost in the middle and a friction pads on one end and a weight in the other end. Once the input assembly spins at a certain speed, the weight is forced to move away from the center. Due to the tilting point the friction pads are moved to the center touching and engaging the cylindrical body of the output assembly.

The output assembly of the centrifugal clutch according to the invention preferably is connected to a reduction gear of the turboprop engine. The reduction gear of the turboprop engine preferably is a planetary reduction gear.

According to a preferred embodiment of the turboprop engine, the centrifugal clutch is not directly connected to a turbine shaft of a turboprop engine's gas turbine. Rather, the turboprop engine preferably comprises a first reduction gearing between the turbine shaft and the input axis of the centrifugal clutch. The first reduction gearing can comprise a pinion connected to the turbine shaft and a main gear that is connected to the input assembly of the centrifugal clutch according to the invention. The lever carrier of the input assembly of the centrifugal clutch according to the invention can be directly connected to the main gear of the first reduction gearing. Accordingly, no explicit input shaft is needed.

Preferably, the input assembly of the centrifugal clutch according to the invention comprises an even number of 2 to 8 levers each lever carrying one weight and one friction pad. In a particularly preferred embodiment, the lever carrier carries 6 levers, each lever being equipped with one weight and one friction pad.

Preferably, the lever carrier has an outer circumferential cylindrical wall enclosing an inner space wherein the levers (at least in part) and the friction pads are arranged. Pivot bearing supports are extending from the outer cylindrical wall into the inner space. The levers preferably are pivotally connected to the pivot bearing supports. The pivot bearing supports preferably each carry a bearing pin or bolt around which a respective lever can pivot. The pivot bearings preferably are plain bearings wherein each lever preferably is provided with a bushing.

Preferably, the outer cylindrical wall of the lever carrier comprises openings into which weights on a respective first lever arm of a respective lever can extend. Thus, it is possible to maximize the distance of each weight from a central axis of rotation of the input assembly while providing a stable housing as provided by the outer cylindrical wall for the input assembly.

The first lever and the second lever arm of each lever preferably are arranged at an angle with respect to each other. Accordingly, the levers are not straight. The angle between the lever arms of each lever allow that each lever can pivot around a certain pivot angle without interfering with the outer cylindrical wall of the input assembly. In particular, the angled design of the levers allows to position a respective friction pad of one lever radially inwardly with respect to a weight on another lever.

Preferably, the mass of each weight is greater than the mass of each friction pad. This increases the maximum friction force and thus the torque than can be transmitted by the centrifugal clutch.

Further, it is preferred, if the first lever arm for the weight is longer than the second lever arm for the friction pad on a respective lever. This further increases the maximum friction force and thus the torque than can be transmitted by the centrifugal clutch as illustrated herein later on.

Preferably, a first product of an extension of the first lever arm in a tangential direction of the centrifugal clutch and the mass of the weight mounted to the first lever arm is larger than a second product of an extension of the second lever arm in the tangential direction and the mass of the friction pad mounted to the second lever arm so as to cause the weight on each lever being moved outwardly and the friction pad on each lever being moved inwardly by a centrifugal force created by a rotation of the clutch assembly around its central axis when the centrifugal clutch rotates.

The centrifugal clutch preferably further comprises a cover for the input assembly wherein the cover is attached to the lever carrier with bolts that each are pivotally holding a lever. The bolts for attaching the cover to the lever carrier are thus also the axis of the pivot bearings for the levers.

Preferably, the weights have a flat shape with a curved outer peripheral surface that follows the curvature of a cylindrical contour of the lever carrier. Such a shape of the weights helps to place the weights' centre of gravity as far as possible away from the clutch's axis of rotation. Thus, the centrifugal force can be maximized within a limited space. This increases the maximum friction force and thus the torque than can be transmitted by the centrifugal clutch.

The weights are preferably made from a different material than the levers, said different material having a larger density than the material of the levers. For example, a suitable material for the levers is steel while the weights preferably comprise lead.

Preferably, each weight is pivotally mounted to a free end of the respective first lever arm. Pivoting weights allow to place the centre of gravity of each weight as far as possible away from the clutch's axis of rotation without requiring more radial space for the maxi-mum extension of the input assembly because the pivoting of a respective weight can compensate for a pivoting of the respective lever, even if the angle of pivoting is very small.

Preferably, each friction pad is pivotally mounted to a free end of the respective second lever arm. Thus, the friction pads can adapt to the outer cylindrical surface of the cylindrical body and the contact surface between the friction pad and the outer circumferential surface of the cylindrical body of the output assembly can be maximized. This also contributes to increasing the maximum friction force and thus the torque than can be transmitted by the centrifugal clutch.

According to a second aspect, a turboprop engine comprising a gas turbine, with a turbine shaft, a centrifugal clutch according to the invention, a reduction gear and a propeller main shaft is provided, wherein during operation torque is transmitted from the turbine shaft to the centrifugal clutch, from the centrifugal clutch to the reduction gear and from the reduction gear to the propeller main shaft. Because of the particular design of the centrifugal clutch according to the invention, a large amount of torque can be transferred with a small centrifugal clutch, helping to keep the seize of the turboprop engine small and the weight of turboprop engine low - and thus suitable for small aircrafts..

Further preferred features and advantages will be apparent from the disclosure of exemplary embodiments. Additional aspects of the present invention will become more readily apparent from the detailed description, particularly when taken together with the drawings.
Figure 1: illustrates an embodiment of a turboprop engine comprising a gas turbine according to the invention;
Figure 2: is a perspective exploded view of a centrifugal clutch according to the invention;
Figure 3a and b: are perspective views of a lever with two lever arm and a weight on a free end of one lever arm and a friction pad on a free end of the other lever arm;
Figure 4: is an illustration of the principle function of the centrifugal clutch according to the invention;
Figures 5: is a perspective view of the centrifugal clutch according to the invention;
Figure 6a: is a front view of the centrifugal clutch according to the invention;
Figure 6b: is a rear view of the centrifugal clutch vane according to the invention;
Figure 6c: is a side view of the centrifugal clutch vane according to the invention;
Figure 7a and 7b: are both perspective views of a lever carrier of a centrifugal clutch according to the invention;
Figure 8a: is a front view of the lever carrier of figure 7a and 7b
Figure 8b: is a rear view of the lever carrier of figures 7a and 7b; and
Fig. 8c, 8d and 8e: are side views of the lever carrier of figures 7a and 7b

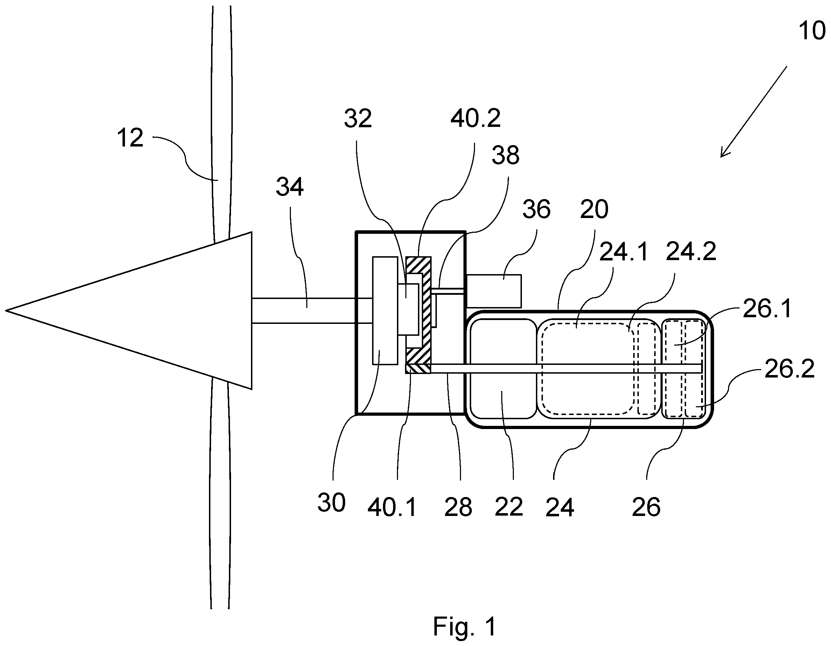

As illustrated in figure 1, the main components of a turboprop engine 10 are a gas turbine assembly 20 that can drive a main shaft 34 of a propeller 12 via a reduction gear. The reduction gear comprises a helical reduction gearing 40, a centrifugal clutch 32 and a planetary reduction gear 30.

The gas turbine engine 20 comprises a compressor 22, for instance a centrifugal compressor. Compressed air provided by the centrifugal compressor 22 is fed into a combustor 24, for instance a combustor with an annular combustion chamber 24.1 with an outlet nozzle 24.2 for the hot exhaust that feeds the hot exhaust to a turbine, for instance an axial turbine 26. The axial turbine 26 drives the centrifugal compressor 22 and - via the planetary reduction gear - the propeller 12.

The turboprop engine 10 as shown in figure 1 comprises a gas turbine assembly 20 with a single turbine stage 26. The gas turbine assembly 20 comprises a stationary nozzle guide vane 26.1 and a turbine wheel 26.2 that is connected to a gas turbine shaft 28. The gas turbine shaft 28 is also connected to the centrifugal compressor 22. Accordingly, gas turbine 26 can drive compressor 22 of turboprop engine 10. Turbine shaft 28 is also connected to a reduction gear 30 that in turn is connected to a propeller 12 by means of gas turbine assembly 20.

During operation, the compressor 22 takes air from the environment, compresses the air and pushes the compressed air into the combustion chamber 24.1 wherein the compressed air is mixed with fuel and combusted by a spark. The combustion chamber outlet nozzle 24.2 directs the resulting flow of hot combustion gases to the axial turbine 26. The axial turbine 26 comprises a single turbine stage with the nozzle guide vane 26.1 and the single turbine wheel 26.2. As mentioned above, the turbine wheel 26.2 drives the turbine shaft 28 that is connected to the centrifugal compressor 22 and the planetary reduction gear 30. The rotation speed of the turbine shaft 28 is reduced by the helical reduction gearing 40 and the planetary reduction gear 30 to a fraction in order to provide a rotation speed that is suitable for driving a standard propeller 12.

A number of improvements contribute to a more efficient turboprop engine providing a power between 100 kW and 400 kW.

Typically, torque is transmitted from the turbine shaft to the reduction gear via a centrifugal clutch.

In the instant embodiment, the centrifugal clutch 32 comprises an input assembly 32.1 with a lever carrier 50. A plurality of levers 52 is pivotally connected to the lever carrier 50. Each lever carrier 50 is provided with a bushing 52.4 so it can pivot around a bolt (not shown) held by a pivot bearing support 58 with a pivot axis, thus defining two lever arms 52.1 and 52.2 that extend in opposite directions from the pivot axis. A first lever arm 52.1 is provided with a weight 54 while the other, second lever arm 52.2 is provided with a friction pad 56, wherein the mass of the weight 54 is at least five times greater but preferably at least 10 times greater than the mass of the friction pad 56. The pivot axis for each lever 52 is arranged laterally offset from a central axis of the input assembly.

Further the centrifugal clutch 32 comprises an output assembly 32.2 having a cylinder body 64 coaxially arranged with the central axis of rotation of the input assembly 32.1.

In the instant embodiment, the centrifugal clutch 32 is not directly connected to a turbine shaft 28 of the turboprop engine's gas turbine 26. Rather, the turboprop engine 10 preferably comprises a first reduction gearing 40 between the turbine shaft 28 and the input assembly of the centrifugal clutch 32. The first reduction gearing 40 can comprise a pinion 40.1 connected to the turbine shaft 28 and a main gear 40.2 that is connected to the input assembly 32.1 of the centrifugal clutch 32 according to the invention. The lever carrier 50 of the input assembly 32.1 of the centrifugal clutch 32 preferably is directly connected to the main gear 40.2 of the first reduction gearing 40. Accordingly, no explicit input shaft is needed.

The lever carrier 50 comprises a cylindrical circumferential wall enclosing an inner space wherein pivot bearing supports 58 for pivotally holding the levers 52 are arranged. A respective lever 52 can be mounted to a respective pivot bearing support 58 by a pin or a bolt (not shown) extending through a boring 58.1 in the pivot bearing support 58 and through a bushing 52.4 in the lever 52. The boring 58.1 in the pivot bearing support 58 and the bushing 52.4 in the lever 52 are defining the pivot axis for the respective lever 52. The pivot axis of all levers 52 extend in parallel to a central axis of rotation of the input assembly 32.1 and of the centrifugal clutch 32. Each pivot axis is radially spaced from the central axis of rotation. In the illustrated embodiment, the pivot bearing is a plain bearing comprising a bolt on the lever carrier 50 and a bushing 52.4 in each lever 52. However, the type of pivot bearing can be different, for instance a ball bearing and thus is not tied to the other features of the levers 52.

The circumferential cylindrical wall 50.1 of lever carrier 50 has openings 50.2 for each weight 54 so as to allow a respective weight 54 extending in the respective opening 50.2. Thus, the centrifugal force acting on each weight 54 is maximized without increasing the diameter of the input assembly beyond an envelope defined by the outer cylindrical surface of the circumferential cylindrical wall 50.1 of lever carrier 50. The inner space enclosed by the circumferential cylindrical wall 50.1 of lever carrier 50 can be closed by a cover 60. Preferably, bolts for attaching the cover 60 to the lever carrier 50 also serve as the axis for a respective pivot bearing 52.3.

The cover 60 can be connected to the main gear 40.2 of the first reduction gearing 40 to thus transmit torque to the input assembly 42.1 of the centrifugal clutch 32.

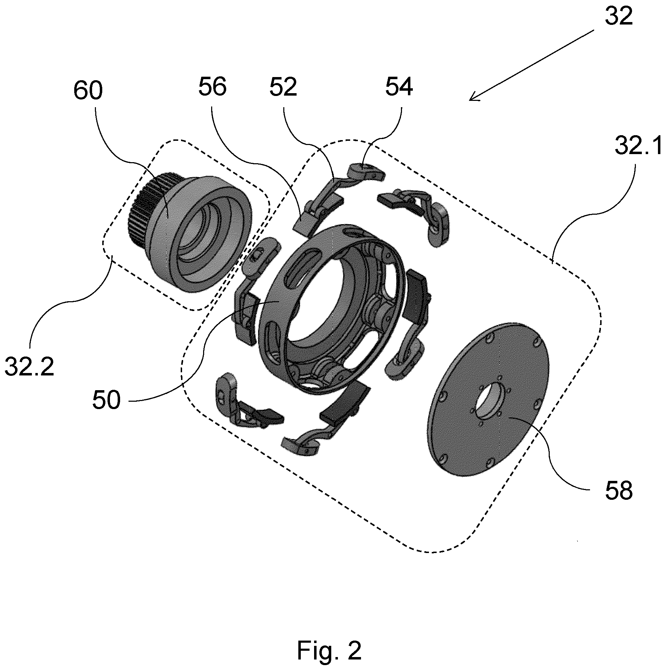

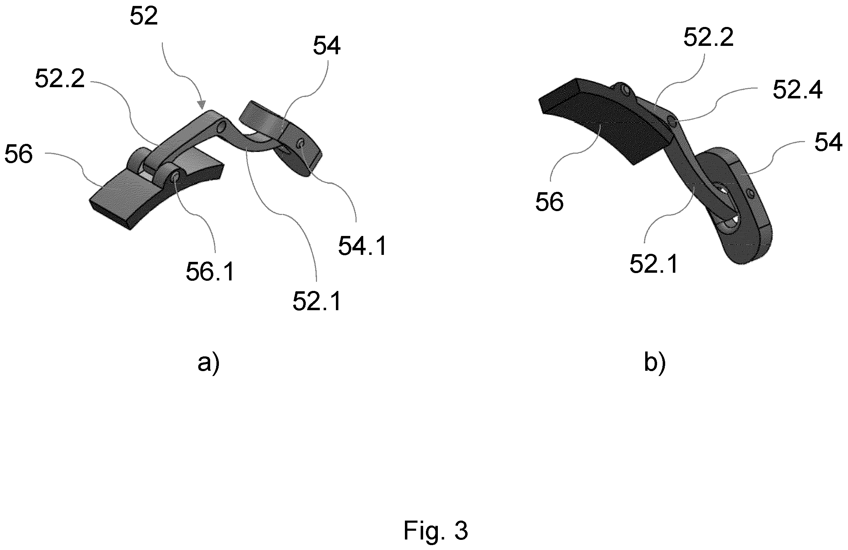

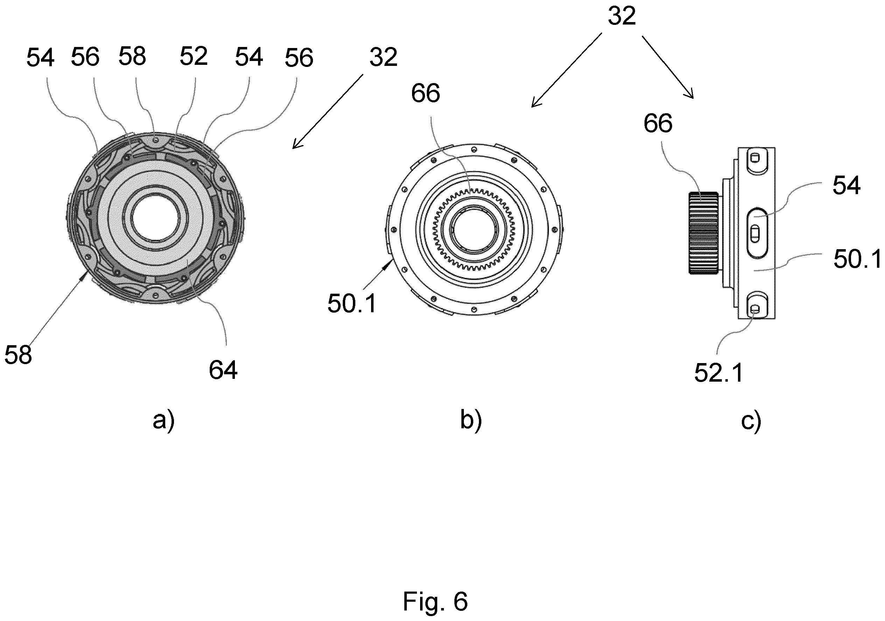

As can be seen in figures 2 and 3, the first lever arm 52.1 and the second lever arm 52.2 of each lever 52 are arranged with an angle with respect to each other. The angle has the effect, that each weight 54 is laterally displaced with respect to each friction pad 56. Accordingly, it is possible to arrange a friction pad of a lever 52 radially inward to a weight 54 of a neighbouring lever 52. Accordingly, friction pads 56 and weights 54 on levers 52 overlap in a radial direction as can be seen in figure 6a. Further, the angle between the first lever arm 52.1 and the second lever arm 52.2 of each lever allow for a pivoting movement of each lever without interfering with the circumferential cylindrical wall 50.1 of lever carrier 50.

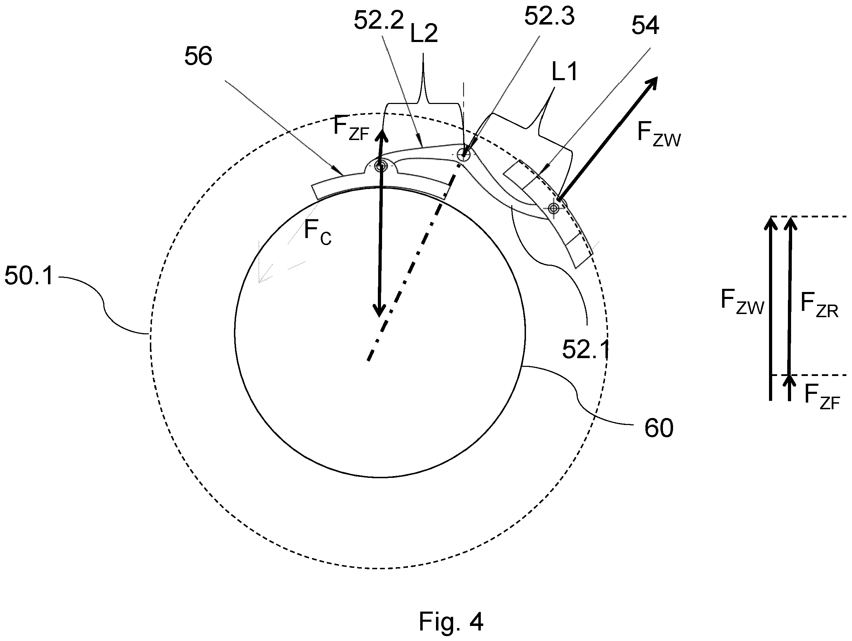

Each friction pad 56 is inwardly orientated towards a cylindrical body 64 of the output assembly 32.2. As a result, friction pads 56 are pressed onto the outer circumferential surface of the cylindrical body 64 when the weights 54 are forced outwardly by centrifugal forces acting on weights 54. This is illustrated in figure 4.

It is noted, that both, each weight 54 and each friction pad 56 are pivotally mounted to a respective free end of the first lever arm 52.1 and the second lever arm 52.2, respectively. In particular, friction pads 56 and weights 54 can be pivotally mounted to a respective lever arm 52.2 or 52.1, respectively, by means of a pin 56.1 or 54.1, respectively. Thus, the friction pads 56 can adapt to the outer cylindrical surface of cylindrical body 64. With respect to the weights 54, pivoting weights allow to place the centre of gravity of each weight 54 as far as possible away from the clutch's axis of rotation without requiring more radial space for the maximum extension of the input assembly 32.1 because the pivoting of a respective weight can compensate for a pivoting of the respective lever 52, even if the angle of pivoting is very small and therefore almost neglectable. It is noted that the weights 54 preferable have a flat shape that follows the curvature of the circumferential cylindrical wall 50.1 of the lever carrier 50. Such a shape of the weights 54 helps to place the weights' centre of gravity as far as possible away from the clutch's axis of rotation. Further, the weights 54 are preferably made from a different material having a larger density than the material of the levers 52. A suitable material for the levers 52 is steel while the weights preferably comprise lead.

The operation of the centrifugal clutch 32 is illustrated in figure 4. As the input assembly 32.1 rotates, a centrifugal force *F_{Z}* is acting on all rotating bodies of mass. The centrifugal force *F_{Z}* is proportional to the mass of the weight 54 or the friction pad 56, respectively. Because the mass of each weight 54 is much higher than the mass of each friction pad 56, the centrifugal force of the weight *F_{ZW}* is greater than the centrifugal force acting on the friction pad *F_{ZF}*. Further, with each lever 52, the first lever arm 52.1 for the weights 54 is longer than the second lever arm 52.2 for the friction pads 56. This leads to a resulting force *F_{ZR}* that forces the weight outwards and in turn creates a pivoting movement of the lever 52 around its pivot axis. Consequently, the friction pads 56 are forced into an inward movement where they come in contact with the outer circumferential surface of the cylinder body 64 of output assembly 32.2 and thus can transfer the power (torque) from the turbine 26 to the propeller main shaft 34. As a consequence of the centrifugal forces acting on the weights 54 and the friction pads 56 and the length L1 of the first lever arm 52.1 and the length L2 of the second lever arm 52.2 the resulting centrifugal force *F_{ZR}* creates a contact Force *F_{C}* between the respective friction pad 56 and the outer circumferential surface of the cylinder body 64 of output assembly 32.2 that follows the equation *F_{C}* = *F_{ZR}* · (*L*1/*L*2). The lengths L1 and L2 of lever arms 52.1 and 52.2, respectively, are configured in a way that the quotient (*L*1/*L*2) is greater than one, i.e. the first lever 52.1 arm preferably is longer than the second lever arm 52.2 to thus increase the friction force *F_{C}*.Thus, the contact force *F_{C}* generated by the centrifugal clutch 32 according to the invention exceeds the contact force of a comparable prior art centrifugal clutch.

A dashed line in figure 4 indicates the outer contour of the circumferential cylindrical wall 50.1 of the lever carrier 50. To keep the place needed for the input assembly - and thus the entire centrifugal clutch - as small as possible, no part of the input assembly should extend far beyond the dashed circle even if the weights have reached their maximum distance from the centrifugal clutch's axis of rotation.

The levers 52 can be spring loaded and thus biased for keeping the friction pads 56 away from the outer circumferential surface of the cylindrical body 64 as long as the centrifugal clutch's speed of rotation is below a threshold speed of rotation. However, such biasing of the levers reduces the maximum contact or friction force *F_{C}* to a certain - albeit small - extend. According to a preferred embodiment, no biasing means - for instance springs - are provided.

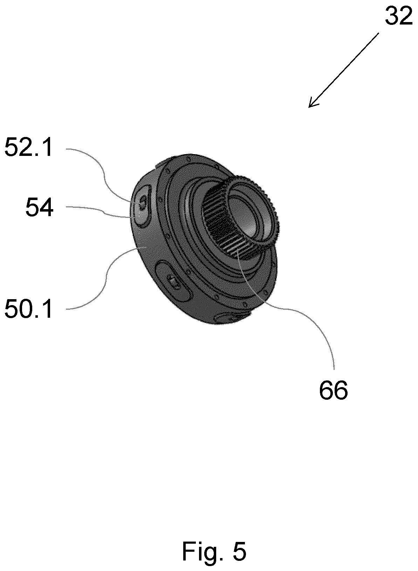

Figure 5 is a perspective view of the centrifugal clutch 32 according to the invention. It is apparent from figure 5, that cylindrical body 64 of the output assembly 32.2 is extending into the inner space enclosed by the circumferential cylindrical wall 50.1 of the input assembly 32.1. Further, figure 5 illustrates how the weights 54 are extending into the openings in the circumferential cylindrical wall 50.1 of lever carrier 50.

Figure 6a is a rear view of the centrifugal clutch 32 without the cover 60. Accordingly, the arrangement of levers 52, weights 54 and friction pads 56 within the inner space enclosed by the circumferential cylindrical wall 50.1 of lever carrier 50 are arranged around the cylindrical body 64 of output assembly 32.2. Figure 6b is a front view of the centrifugal clutch 32 according to the invention and figure 6c is a side view of the centrifugal clutch 32 according to the invention.

The cylindrical body 64 of the output assembly 32.2 may be attached to a gear 66 having cut teeth. The gear 66 can for instance be a sun wheel of a planetary gear such as planetary reduction gear 30.

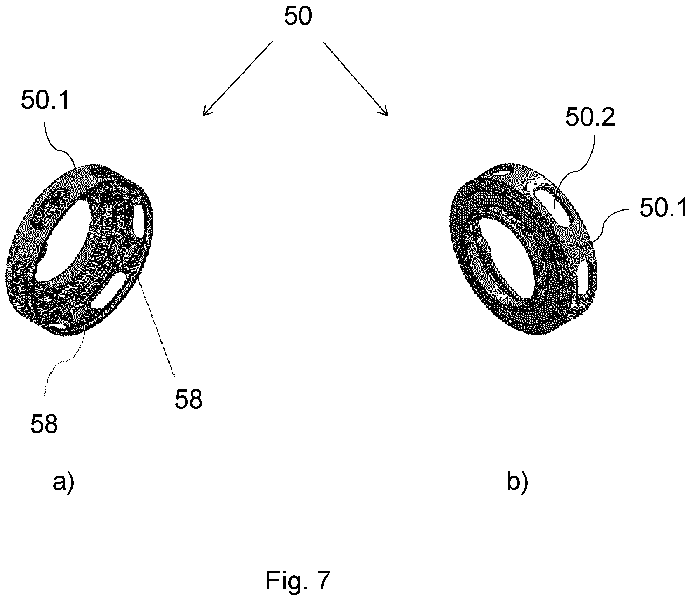

Figures 7a and 7b are perspective views of the lever carrier 50 illustrating the circumferential cylindrical wall 50.1 with openings 50.2 for the weights. Further, figures 7a and 7b illustrate pivot bearing supports 58 with bores 58.1 for receiving a bolt acting as an axis for each pivot bearing 52.3.

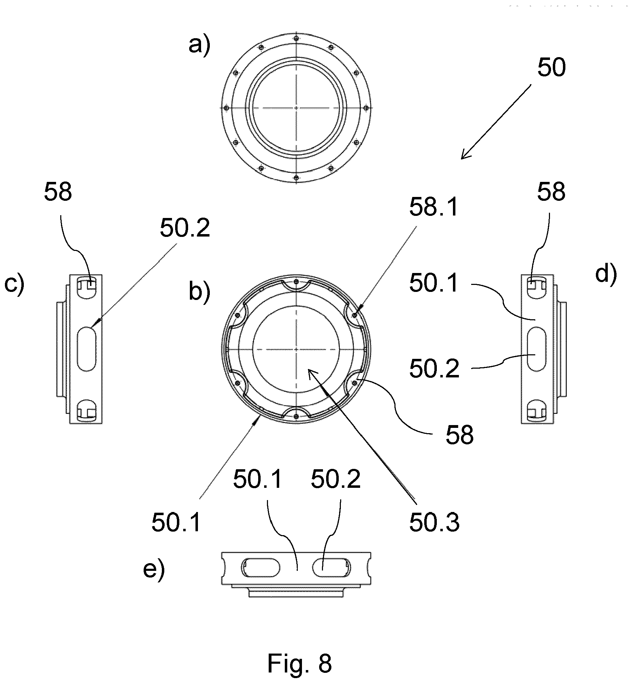

A rear view of lever carrier 50 is shown in figure 8a and a front view of the lever carrier 50 is shown in figure 8b. Figures 8c to 8e are side views of lever carrier 50. The lever arm carrier 50 has a central opening 50.3 for receiving the cylindrical body 64 of the output assembly 32.2.

### Reference numerals

- 10: turboprop engine
- 12: propeller
- 14: air intake
- 20: gas turbine assembly
- 22: compressor of the gas turbine assembly
- 23: open space surrounding the combustor's combustion chamber
- 24: combustor
- 24.1: combustion chamber
- 24.2: outlet nozzle
- 26: axial gas turbine stage of the gas turbine assembly
- 26.1: nozzle gas vane of the axial gas turbine
- 26.2: turbine wheel of the axial gas turbine
- 28: gas turbine shaft
- 30: planetary reduction gear
- 32: centrifugal clutch
- 32.1: input assembly
- 32.2: output assembly
- 34: main shaft, propeller shaft
- 36: starter/generator
- 38: starter gearbox
- 40: helical reduction gearing
- 40.1: pinion of the helical reduction gearing
- 40.2: main gear of the helical reduction gearing
- 50: lever carrier of the input assembly
- 50.1: circumferential cylindrical wall of the lever carrier
- 50.2: opening in the circumferential cylindrical wall of the lever carrier
- 50.3: central opening for receiving the cylindrical body of the output assembly 32.2
- 52: lever
- 52.1: first lever arm of the lever for carrying a weight
- 52.2: second lever arm of the lever for carrying a friction pad
- 52.3: pivot bearing, plain bearing
- 52.4: bushing of the plain bearing in a lever allowing the lever to pivot
- 54: weight
- 54.1: pin for pivotally holding the weight on the lever
- 56: friction pad
- 56.1: pin for pivotally holding the friction pad on the lever
- 58: pivot bearing support for the pivot bearing of the lever carrier
- 58.1: boring for receiving a pin or bolt of the pivot bearing
- 60: cover of the input assembly
- 64: cylindrical body of the output assembly
- 66: gear

- F_{ZR}: centrifugal force
- F_{ZW}: centrifugal force of the weight
- F_{ZF}: centrifugal force acting on the friction pad
- F_{c}: friction force
- L1: effective length of the first lever arm
- L2: effective length of the second lever arm
- m_{fp}: second mass
- m_{w}: first mass

## Claims

1. Centrifugal clutch (32) comprising an
input assembly (32.1) with
a lever carrier (50) wherein
a plurality of levers (52) is pivotally connected to the lever carrier (50) allowing each lever (52) to pivot around a pivot bearing (52.3) with a pivot axis, thus defining two lever arms (52.1, 52.2) that extend in opposite directions from the pivot axis, wherein
a first lever arm (52.1) is provided with a weight (54) while
a second lever arm (52.2) is provided with a friction pad (56),
wherein the pivot axis for each lever (52) is arranged laterally offset from a central axis of rotation of the input assembly and
an output assembly (32.2) that comprises
a cylinder body (6) coaxially arranged with the central axis of the input assembly.

2. Centrifugal clutch (32) according to claim 1, wherein a first mass (m_{w}) of each weight (54) is greater than a second mass (m_{fp}) of each friction pad (56) or wherein the first lever arm (52.1) is longer than the second lever arm (52.2) or wherein a first mass (m_{w}) of each weight (54) is greater than a second mass (m_{fp}) of each friction pad (56) and the first lever arm (52.1) is longer than the second lever arm (52.2).

3. Centrifugal clutch (32) according to claim 2, wherein a first product of an extension of the first lever arm in a tangential direction of the centrifugal clutch (32) and the first mass (m_{w}) of the weight (54) mounted to the first lever arm (52.1) is larger than a second product of an extension of the second lever arm (52.2) in the tangential direction and the second mass (m_{fp}) of the friction pad (56) mounted to the second lever arm (52.2) so as to cause the weight on each lever being moved outwardly and the friction pad on each lever being moved inwardly by a centrifugal force created by a rotation of the clutch assembly around its central axis when the centrifugal clutch rotates.

4. Centrifugal clutch (32) according to at least one of claims 1 to 3, wherein the lever carrier (50) comprises a circumferential cylindrical wall (50.1) enclosing an inner space in which the cylindrical body (64) of the output assembly (32.2) and the levers (52) with the friction pads (56) are arranged.

5. Centrifugal clutch (32) according to claim 4, wherein pivot bearing bolts for pivotally holding the levers (52) are held by pivot bearing supports (58) form on the inner side of the circumferential cylindrical wall (50.1).

6. Centrifugal clutch (32) according to claim 4 or 5, wherein the circumferential cylindrical wall (50.1) comprises an opening or openings (50.2) through which a respective weight (54) can extend.

7. Centrifugal clutch (32) according to at least one of claims 1 to 6, wherein the pivot bearings for the levers (52) are plain bearings with a bushing arranged in each lever (52).

8. Centrifugal clutch (32) according to at least one of claims 1 to 7, wherein the first lever arm (52.1) and the second lever arm (52.2) of each lever (52) are arranged at an angle with respect to each other.

9. Centrifugal clutch (32) according to at least one of claims 1 to 8, wherein a friction pad (56) of one lever (52) is arranged radially inwardly with respect to a weight (54) on another lever (52).

10. Centrifugal clutch (32) according to at least one of claims 1 to 9, further comprising a cover (60) for the input assembly (32.1) wherein the cover is attached to the lever carrier with bolts that each are pivotally holding a lever (52).

11. Centrifugal clutch (32) according to at least one of claims 1 to 10, wherein the weights (54) have a flat shape with a curved outer peripheral surface that follows the curvature of a cylindrical contour of the lever carrier (50).

12. Centrifugal clutch (32) according to at least one of claims 1 to 11, wherein the weights (54) are made from a material having a larger density than the material of the levers (52).

13. Centrifugal clutch (32) according to at least one of claims 1 to 12, wherein each weight (54) is pivotally mounted to a free end of the respective first lever arm (52.1).

14. Centrifugal clutch (32) according to at least one of claims 1 to 13, wherein each friction pad (56) is pivotally mounted to a free end of the respective second lever arm (52.2).

15. Turboprop engine (10) comprising a gas turbine (20), with a turbine shaft (28), a centrifugal clutch (32), a reduction gear (30) and a propeller main shaft (34), wherein during operation torque is transmitted from the turbine shaft (28) to the centrifugal clutch (32), from the centrifugal clutch (32) to the reduction gear (30) and from the reduction gear (30) to the propeller main shaft (34),
**characterized in that** the centrifugal clutch (32) is a centrifugal clutch (32) according to at least one of claims 1 to 14.
